(19) **Europäisches Patentamt**

**European Patent Office**

**Office européen des brevets**

(11) **EP 1 035 699 B1**

(12) **FASCICULE DE BREVET EUROPEEN**

(45) Date de publication et mention
de la délivrance du brevet:
**16.03.2005 Bulletin 2005/11**

(51) Int Cl.⁷: **H04L 27/26**

(21) Numéro de dépôt: **00201832.3**

(22) Date de dépôt: **14.01.1994**

(54) **Méthode pour isoler une fréquence bloc à partir d'un signal formaté en blocs**

Verfahren zur Abtrennung einer Blockfrequenz aus einem blockformattierten Signal

Method for isolating a block frequency from a block formatted signal

(84) Etats contractants désignés:
**DE FR GB IT SE**

(30) Priorité: **20.01.1993 FR 9300539**

(43) Date de publication de la demande:
**13.09.2000 Bulletin 2000/37**

(62) Numéro(s) de document de la (des) demande(s)
initiale(s) en application de l'article 76 CBE:
**94200086.0 / 0 608 024**

(73) Titulaire: **Koninklijke Philips Electronics N.V.
5621 BA Eindhoven (NL)**

(72) Inventeur: **Hayet, Pascal
75008 Paris (FR)**

(74) Mandataire: **Charpail, François et al
Société Civile S.P.I.D.
156, Boulevard Haussmann
75008 Paris (FR)**

(56) Documents cités:
**EP-A- 0 653 858       EP-A- 0 656 706
US-A- 3 599 103       US-A- 3 883 729**

- **LASSALLE R ET AL: "PRINCIPLES OF
MODULATION AND CHANNEL CODING FOR
DIGITAL BROADCASTING FOR MOBILE
RECEIVERS" EBU
REVIEW-TECHNICAL,BE,EUROPEAN
BROADCASTING UNION. , no. 224, 1 août 1987
(1987-08-01), pages 168-190, XP000560523
Brussels, Belgium ISSN: 0251-0936**
- **ELDON J: "APPLICATIONS OF THE DIGITAL
CORRELATOR" MICROPROCESSORS AND
MICROSYSTEMS,GB,IPC BUSINESS PRESS
LTD. LONDON, vol. 12, no. 4, 1 mai 1988
(1988-05-01), pages 214-223, XP000098953 ISSN:
0141-9331**
- **TOURTIER P J ET AL: "MULTICARRIER MODEM
FOR DIGITAL HDTV TERRESTRIAL
BROADCASTING" SIGNAL PROCESSING:
IMAGE COMMUNICATION, ELSEVIER SCIENCE
PUBLISHERS, vol. 5, no. 5/06, 1 décembre 1993
(1993-12-01), pages 379-403, XP000426711
Amsterdam, The Netherlands ISSN: 0923-5965**

EP 1 035 699 B1

**Description**

L'invention concerne une méthode pour isoler une fréquence, dite fréquence bloc, à partir d'un signal reçu formaté en blocs. L'invention concerne également un dispositif pour isoler une fréquence, dite fréquence bloc, à partir d'un signal reçu formaté en blocs.

L'article intitulé "Applications of the digital correlator " de John Eldon publié dans la revue "Microprocessor and microsystems", volume 12, nº4, 1er mai 1988, pages 214-224, décrit l'utilisation de moyens de corrélation pour détecter des mots particuliers de synchronisation et des périodicités dans un signal reçu.

L'article intitulé "Principles of modulation and channel coding for digital broadcasting for mobile receivers" de Lassalle et Alard, publié dans le EBU Review-Technical no. 224, 1.8.1987, pages 168-190, décrit l'utilisation d'un intervalle de garde dans un système OFDM pour éliminer l'interference inter-symbole.

L'invention consiste notamment à appliquer un tel enseignement pour isoler une fréquence, dite fréquence bloc, à partir d'un signal reçu formaté en blocs, lesdits blocs étant issus de symboles d'une constellation et comportant chacun des informations, dites informations identiques, constituées par une partie de l'information utile transmise dans le bloc et une copie de cette partie placée en décalage dans ledit bloc avant l'émission.

Il peut, par exemple, s'agir de signaux obtenus par répartition multiplexée de N fréquences orthogonales (OFDM : Orthogonal Frequency Division Multiplexing) qui consiste à fractionner une information à transmettre en la répartissant sur un grand nombre de canaux élémentaires à bas débit. On transforme ainsi un canal à large bande fortement sélectif en un grand nombre de canaux élémentaires non sélectifs. Comme l'ensemble constitue un canal à large bande, il est peu probable que des évanouissements en cours de transmission affectent simultanément la totalité du canal. Cette technique permet notamment de réduire les interférences intersymboles.

A chaque canal élémentaire correspond alors une fréquence, l'ensemble des fréquences étant symétriquement réparti autour d'une fréquence porteuse centrale. Comme à la réception il est difficilement acceptable d'utiliser des filtres sélectifs, on préfère tolérer un recouvrement des spectres mais en imposant des conditions d'orthogonalité entre les fréquences pour éliminer l'interférence intersymbole aux instants d'échantillonnage. L'ensemble du spectre d'un signal OFDM tend ainsi vers un spectre rectangulaire.

Le signal OFDM est organisé par trames formées de blocs dont certains sont des blocs de service et d'autre des blocs de données. Pour éviter les interférences intersymboles, chaque bloc contient des informations redondantes. Un bloc quelconque est formé par toutes les fréquences OFDM que met en oeuvre le dispositif, les fréquences étant modulées par des symboles à transmettre issus d'une modulation codée par exemple une modulation numérique MDP ou MAQ. A l'émission, ces symboles sont codés à un certain rythme qu'il faut retrouver à la réception afin de pouvoir les décoder correctement. L'invention a pour but d'isoler un signal qui permet notamment de retrouver à la réception le rythme utilisé à l'émission.

Ce but est atteint avec une méthode et un dispositif tels que revendiqués dans les revendications 1 et 3 de la présente demande.

Ainsi avantageusement l'invention utilise la redondance des données contenues dans chaque bloc pour isoler un signal à la fréquence bloc.

Préférentiellement, ladite étape de corrélation comporte une étape de retard pour retarder le signal reçu d'un délai séparant lesdites informations identiques, et une étape de soustraction pour générer ledit signal d'écart par soustraction du signal reçu et du signal retardé.

Ces différents aspects de l'invention et d'autres encore seront apparents et élucidés à partir des modes de réalisation décrits ci-après.

L'invention sera mieux comprise à l'aide des figures données à titre d'exemples non limitatifs qui représentent :

Figure 1 : un chronogramme indiquant la génération d'un signal d'écart à la cadence bloc.
Figure 2 : un schéma d'un dispositif d'isolation d'un signal d'écart e(t).

La description qui suit est développée dans le cas particulier d'un signal OFDM, mais elle s'applique également à d'autres signaux formatés par blocs pour lesquels chaque bloc renferme des informations redondantes.

La technique OFDM consiste à multiplexer en fréquence plusieurs porteuses orthogonales modulées par les symboles. Un symbole OFDM peut s'écrire :

$$(1) \quad s(t) = \mathrm{Re}\left\{ e^{2 i \pi f_0 t} \sum_{k=0}^{N-1} x_k . \Phi_k(t) \right\}$$

pour $j.T_s' < t < (j+1)T's$

2

avec $\Phi_k(t) = e^{2i\pi k\, t/Ts}$ pour j.T's$\leq$ k$\leq$ (j+1) T's
où :

$T'_s$ :     durée totale d'un symbole OFDM, $T'_s = T_s + \Delta$.
$R_e$ :     partie réelle d'un nombre complexe.
k :     indice des porteuses orthogonales.
$T_s$ :     durée utile d'un symbole OFDM.
$\Delta$ :     intervalle de garde.
N :     nombre maximal de porteuses.
$f_o$ :     fréquence arbitraire.
j :     indice du symbole OFDM.

Ainsi entre les instants j.$T'_s$ et (j+1) $T'_s$, un signal OFDM est constitué par un bloc de symboles complexes $x_k$, chaque symbole $x_k$ modulant une porteuse orthogonale 0$\leq$ k$\leq$ N-1.

Pour éviter le problème de recouvrement de spectre et pour faciliter le filtrage à la réception, la somme correspondant à l'équation (1), est effectuée sur $N_u$ porteuses où $N_u$ est le nombre de porteuses utiles ($N_u < N$).

Pour réaliser la modulation OFDM, c'est-à-dire former le signal s(t) de l'équation 1, on utilise un modulateur qui effectue un calcul d'une transformée de Fourier rapide inverse (FFT$^{-1}$). Pour cela on choisit pour N un nombre de la forme $2^x$ où x est un nombre entier. On insère également d'autres blocs de contrôle destinés à la transmission.

Les paramètres choisis sont, par exemple, les suivants :

$T'_s$ = 160 μs, $T_s$ = 128 μs et $\Delta$ = 32 μs,
N = 1024 porteuses, $N_u$ = 900 porteuses.

L'intervalle de garde $\Delta$ a pour rôle principal d'absorber les échos provenant du canal multitrajets et ayant des retards inférieurs à $\Delta$. Durant l'intervalle de garde (qui est préférentiellement égal au quart de la durée utile), un signal identique à celui d'une partie de la durée utile est transmis.

Le choix de $N_u$ = 900 provient du fait que la bande autour de chaque porteuse étant de $1/T_s$ = 7,81 KHz, il faut 900 porteuses pour avoir une bande effective du signal transmis d'environ 7 MHz (la largeur de bande exacte étant de 7,031 MHz).

Les blocs à la sortie d'un codeur de canal sont transmis par trames. Ainsi une trame regroupe plusieurs blocs OFDM multiplexés temporellement. Un bloc OFDM peut contenir des données ou peut être un bloc particulier servant à la synchronisation (de trame, de rythme, de porteuse) ou servant comme bloc de référence pour la modulation différentielle.

Un exemple de structure de trame est donné par :

| 1 | 2 | 3 | 4 | 5 | 6 | 7 | | j-1 | j | | 125 |
|---|---|---|---|---|---|---|---|---|---|---|---|
| Nul | AFC | Wob | EXT 1 | EXT 2 | DATA 1 | DATA 2 | | | | | DATA 120 |

$\longleftrightarrow$

Ts=160μ

$\longleftrightarrow$

Tf=20ms

**TABLEAU I**

La trame contient 125 blocs OFDM et a une durée $T_f$ de 20 ms :

- Le premier bloc est le bloc nul durant lequel rien n'est transmis ($x_k$ = 0, k=0, N-1). Il est utilisé pour synchroniser le début de la trame.
- Le deuxième est le bloc AFC (contrôle automatique en fréquence) utilisé pour la synchronisation en fréquence de l'oscillateur local du récepteur par rapport à celui de l'émetteur.
- Le troisième est le bloc de wobulation défini par :

$$x_k = \sqrt{2}\, e^{j\Phi_k}, \; \Phi_k = \pi\, \frac{k^2}{N} + \pi/4$$

Le bloc de wobulation est utilisé comme bloc de référence pour le codage différentiel et aussi pour estimer la réponse impulsionnelle du canal afin de synchroniser précisément le début de la trame.

- Les quatrième et cinquième blocs sont des blocs supplémentaires pouvant servir à transmettre des données de service.
- Finalement, on a les 120 blocs OFDM de données.

Une trame contient 100 mots de code générés par le codeur de canal.

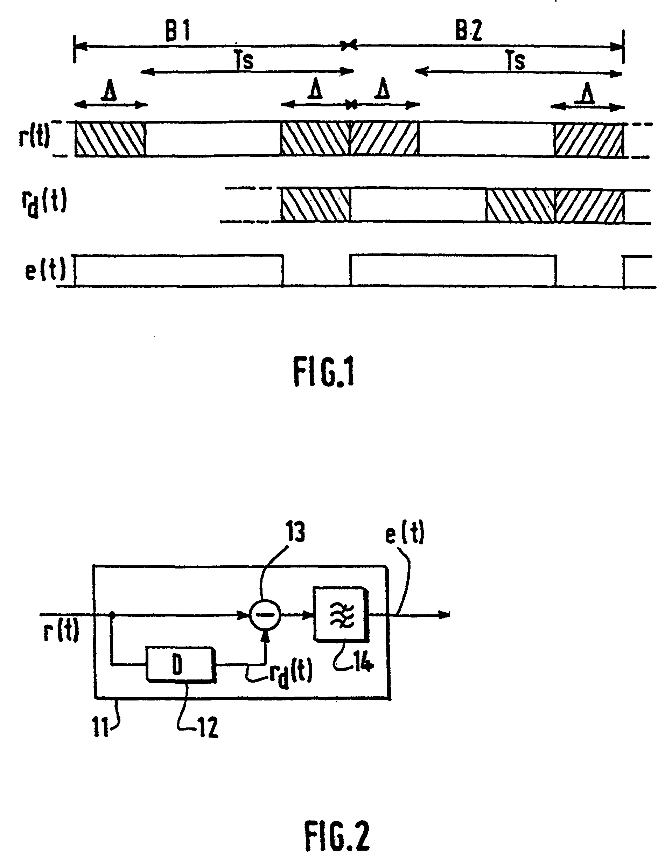

L'invention met à profit l'existence d'un intervalle de garde dans chaque bloc d'une trame OFDM. La figure 1 représente deux blocs consécutifs B1 et B2. L'explication qui va suivre s'applique à tous les blocs. Les blocs B1/B2 sont formés d'un intervalle de garde de durée $\Delta$ suivi d'un intervalle utile de durée $T_s$ qui contient des données utiles. Dans un bloc émis, les données qui apparaissent en fin de l'intervalle utile $T_s$ sont copiées en début de bloc avant leur émission sur le canal. On observe donc que dans chaque bloc une information identique apparait en début et en fin de bloc. Sur la figure 1, le signal reçu est le signal r(t). Ce signal r(t) est retardé par des moyens de retard d'un retard tel que l'information de début du signal retardé $r_d(t)$ soit en phase avec l'information de fin du signal non retardé r(t). Pour un même bloc B1, ces deux informations sont identiques. En effectuant une opération de soustraction de ces deux signaux, on obtient un signal e(t) qui est formé d'un intervalle de durée $\Delta$ où e(t) est nul précédé d'un intervalle de durée $T_s$ où il est non nul. Sur la figure 1, le signal e(t) est représenté sous la forme de créneaux mais en réalité ce signal présente une forme plus complexe et plus sinusoïdale, ayant une fréquence fondamentale égale à la fréquence bloc. Il est donc possible par filtrage d'isoler cette fréquence bloc.

La figure 2 représente un schéma d'un dispositif 11 selon l'invention qui permet d'isoler la fréquence bloc. Le dispositif 11 comprend des moyens de filtrage accordé 14. Le signal r(t) est retardé dans des moyens de retards 12 pour fournir le signal $r_d(t)$. Les signaux r(t) et $r_d(t)$ sont soustraient l'un de l'autre dans des moyens de soustraction 13 et délivrent le signal d'écart e(t). Ce signal d'écart e(t) est au préalable filtré dans un filtre passe-bande 14 accordé sur la fréquence de blocs utilisée à l'émission.

## Revendications

1. Méthode pour isoler une fréquence, dite fréquence bloc, à partir d'un signal reçu formaté en blocs, lesdits blocs étant issus de symboles d'une constellation et comportant chacun des informations, dites informations identiques, constituées par une partie de l'information utile transmise dans le bloc et une copie de cette partie placée en décalage dans ledit bloc avant l'émission, ladite méthode comportant une étape de corrélation entre lesdites informations identiques pour générer un signal, dit signal d'écart, dont la fréquence est représentative de la fréquence bloc.

2. Méthode selon la revendication 1, **caractérisée en ce que** ladite étape de corrélation comporte une étape de retard pour retarder le signal reçu d'un délai séparant lesdites informations identiques, et une étape de soustraction pour générer ledit signal d'écart par soustraction du signal reçu et du signal retardé.

3. Dispositif (11) pour isoler une fréquence, dite fréquence bloc, à partir d'un signal reçu formaté en blocs (r(t)), lesdits blocs étant issus de symboles d'une constellation et comportant chacun des informations, dites informations identiques ($\Delta$), constituées par une partie de l'information utile transmise dans le bloc et une copie de cette partie placée en décalage dans ledit bloc avant l'émission, ledit dispositif comportant des moyens de retard (12) pour fournir un signal retardé ($r_d(t)$) à partir du signal reçu, des moyens de soustraction du signal reçu et du signal retardé (13), et des moyens de filtrage (14) du signal généré par lesdits moyens de soustraction pour générer un signal (e(t)), dit signal d'écart, dont la fréquence est représentative de ladite fréquence bloc.

## Patentansprüche

1. Verfahren zum Isolieren einer Frequenz, der so genannten Blockfrequenz, ausgehend von einem erhaltenen blockformatierten Signal, wobei die besagten Blöcke von Symbolen einer Konstellation ausgehen und jeweils Informationen, die so genannten identischen Informationen, enthalten, die aus einem Teil der im Block übertragenen Nutzinformation und einer Kopie dieses vor der Übertragung versetzt in den besagten Block gebrachten Teils gebildet werden, wobei das besagte Verfahren einen Korrelationsschritt zwischen den besagten identischen Informationen enthält, um ein Signal, das so genannte Abstandssignal, zu erzeugen, dessen Frequenz für die Blockfrequenz kennzeichnend ist.

2. Verfahren nach Anspruch 1, **dadurch gekennzeichnet, dass** der besagte Korrelationsschritt einen Verzögerungsschritt zum Verzögern des erhalten Signals um einen Zeitraum zur Trennung der besagten identischen Informationen enthält, und einen Subtraktionsschritt zum Erzeugen des besagten Abstandssignals durch Subtraktion des erhalten Signal und des verzögerten Signals.

3. Anordnung (11) zum Isolieren einer Frequenz, der so genannten Blockfrequenz, ausgehend von einem erhalten blockformatierten Signal (r(t), wobei die besagten Blöcke aus Symbolen einer Konstellation ausgehen und jeweils Informationen, die so genannten identischen Informationen (d), enthalten, die aus einem Teil der in dem Block übertragenen Nutzinformation und einer vor der Übertragung versetzt in den besagten Block gebrachten Kopie dieses Teils gebildet werden, die besagte Anordnung Verzögerungsmittel (12) enthält, um ausgehend von dem erhaltenen Signal ein verzögertes Signal (rd(t)) zu liefern, Subtraktionsmittel des erhaltenen Signals und des verzögerten Signals (13) und Filtermittel (14) des von den besagten Subtraktionsmitteln erzeugten Signals, um ein Signal (e(t)), das so genannte Abstandssignal, zu erzeugen, dessen Frequenz für die besagte Blockfrequenz kennzeichnend ist.

**Claims**

1. A method for isolating a frequency, called block frequency, from a block-' formatted received signal, said blocks stemming from symbols from a constellation and comprising each information signals, called identical information signals, in the form of a part of the useful information transmitted in the block and a copy of this part shifted in said block prior to the transmission, said method comprising a correlation step of correlation between said identical information signals to generate a signal, called difference signal, whose frequency is representative of the block frequency.

2. A method as claimed in claim 1, **characterized in that** said correlation step comprises a delay step for delaying the received signal by a delay that separates said identical information signals, and a subtracting step for generating said difference signal by subtraction of the received signal and the delayed signal.

3. A device (11) for isolating a frequency, called block frequency, from a block-formatted received signal (r(t)), said blocks stemming from symbols from a constellation and comprising each information signals, called identical information signals ($\Delta$), in the form of a part of the useful information transmitted in the block and a copy of this part shifted in said block prior to the transmission, said device comprising delay means (12) for producing a delayed signal ($r_d(t)$) from the received signal, subtraction means for subtracting the received signal and the delayed signal (13), and filtering means (14) for filtering the signal generated by said subtraction means to generate a signal (e(t)), called difference signal), whose frequency is representative of said block frequency.

FIG.1

FIG.2